Europäisches Patentamt

European Patent Office

Office européen des brevets

(11) Veröffentlichungsnummer: **0 032 217**
**B1**

(12) **EUROPÄISCHE PATENTSCHRIFT**

(45) Veröffentlichungstag der Patentschrift: **10.09.86**

(21) Anmeldenummer: **80107926.0**

(22) Anmeldetag: **16.12.80**

(51) Int. Cl.⁴: **A 23 G 1/02**

(54) **Verfahren zur Vorveredelung mit anschliessender Röstveredelung von roher Kakaomasse verschiedener Provenienzen und Vorrichtung zu seiner Durchführung.**

(30) Priorität: **11.01.80 DE 3000930**

(43) Veröffentlichungstag der Anmeldung:
**22.07.81 Patentblatt 81/29**

(45) Bekanntmachung des Hinweises auf die
Patenterteilung:
**10.09.86 Patentblatt 86/37**

(84) Benannte Vertragsstaaten:
**BE CH FR GB IT LI LU NL**

(56) Entgegenhaltungen:
**DD-A- 1 402**
**DE-A-2 036 202**
**DE-A-2 743 246**
**DE-B-2 130 134**
**FR-A-1 558 215**
**FR-A-2 222 020**
**US-A-2 441 861**
**US-A-2 520 807**
**US-A-3 904 777**
**US-A-3 955 489**

(73) Patentinhaber: **F.B. LEHMANN Maschinenfabrik GmbH**
**Daimlerstrasse 12**
**D-7080 Aalen (DE)**

(72) Erfinder: **Rapp, Rudolf, Dr. Dipl.-Ing.**
**Liebenäckerweg 28**
**D-7035 Waldenbuch (DE)**

(74) Vertreter: **Kern, Wolfgang, Dipl.-Ing.**
**Patentanwälte et al**
**Dipl.-Ing. Herbert Tischer Dipl.-Ing. Wolfgang Kern Dipl.-Chem. Dr. H.P. Brehm Albert-Rosshaupter-Strasse 65**
**D-8000 München 70 (DE)**

Courier Press, Leamington Spa, England.

**Beschreibung**

Die Erfindung betrifft ein Verfahren zur Vorveredelung roher Kakaomasse hinsichtlich der Verbesserung des Fermentationsgrades und zur Röstveredelung von vorveredelter Kakaomasse, gemäß dem Oberbegriff des Anspruchs 1, sowie eine Vorrichtung zur Durchführung des Verfahrens.

Das bekannte Verfahren (DE—OS 27 43 246) soll dazu dienen, Kakaomasse in einem kontinuierlichen Vorgang derart aufzubereiten, daß die in der Schokoladenherstellung allgemein übliche Conchierzeit wesentlich verkürzt werden kann, ohne daß Qualitätseinbußen und Geschmackseinbußen der fertigen Schokolade hingenommen werden müssen. Versuche haben ergeben, daß nach Behandlungen in der beschriebenen Weise das Conchieren zwar verkürzt werden kann, daß jedoch bei zu kurzer Conchierzeit die Qualität des Fertigproduktes leidet. Die Ursache dafür mag in mehreren Faktoren zu suchen sein. Das bekannte Verfahren beruht auf dem Prinzip der Entfeuchtung, Entsäuerung und Entgasung des zu behandelnden Gutes, wobei Wasser unter Umständen mit reduzierenden Zuckern einer zu röstenden Kakaomasse zugegeben wird, um bei Kakaosorten mit geringem Aromavorstufenpotential dieses künstlich zu erhöhen bzw. gleichmässiger in der Gesamtmasse unter hohen Scherkräften zu verteilen.

Das bekannte Verfahren basiert ferner darauf, daß die der zu behandelnden Kakaomasse eingeimpfte Substanz nur einmal zu Beginn zugesetzt werden kann. Naturgemäß können dies nur ca. 2% Wasser sein, da die Viskosität, d.h. dass Fließverhalten der Kakaomasse proportional abnimmt, wie der Wassergehalt zunimmt. Das Gut verliert daher sehr schnell seine Pumpfähigkeit. Demnach kann die Wirkung des Wassers und der unter Umständen darin gelösten reduzierenden Zucker nur gering sein.

Ein weiterer, dem bekannten Verfahren anhaftender Nachteil besteht darin, daß die im gesamten Behandlungsvorgang entstehenden Wrasen und Brüden im Gegenstrom über die Massen hinweggeführt werden, also die aus der Masse gerade auszutreibenden Stinkstoffe mit der im Gegenstrom über die Masse und durch die Masse hindurch geleiteten Heißluft immer wieder mit der neu zugeführten Masse in engste Berührung gebracht werden.

Es sind ferner Röstveredelungsverfahren bekannt (US—A—2 441 861 and US—A—3 904 777), bei denen ein Gas im Gegenstrom geführt wird und Lösungen von reduzierenden Zuckern in beschränkten Mengen vor dem Ausbreiten der Masse zu einer dünnen Schicht zugesetzt werden können.

Bei diesen Verfahren ist jedoch keine Vorveredelungsstufe vorgesehen, in der aromabeeinflussende Reaktionen bereits stattfinden.

Der Erfindung liegt die Aufgabe zugrunde, das eingangs genannte bekannte Verfahren dahingehend zu verbessern, daß auf den Conchierprozess ganz verzichtet werden kann, mit der Maßgabe, daß so hergestellte Schokoladen zur 1. Qualität nach einem zu bewertenden Qualitätsschema mit numerischer Skala von 1—9 gehören, wobei 9—7 der 1. Qualität entsprechen. Ferner soll für die Durchführung des Verfahrens eine geeignete Vorrichtungen geschaffen werden. Es sei noch darauf hingewiesen, daß das oben genannte Qualitätsschema das Karlsruher Bewertungsschema aus Lebensmittel-Wissenschaft und Technologie, 2 (1969), S.132, und der Dissertation von R. Rapp, 1956 TU München, S.34 ff. ist.

Die Lösung dieser Aufgabe erfolgt, was ihren verfahrenstechnischen Teil anbelangt, mit den kennzeichnenden Merkmalen des Anspruchs 1, und, was den vorrichtungstechnischen Teil anbelangt, mit den kennzeichnenden Merkmalen des Anspruchs 8, wobie neue Erkenntnisse zur Vorveredelung und Röstveredelung von rohen Kakaomassen zugrundeliegen.

Im einzelnen sind dies die folgenden Erkenntnisse: Der Fermentationsprozess, in dem die Aromavorstufen in der Kakaobohne gebildet werden, findet heute noch überwiegend unter so primitiven Verhältnissen statt, daß man von einem gesteuerten Prozess nicht sprechen kann. Wenn man den Wassergehalt von roher Kakaomasse (diese wird so definiert, daß sie aus Kakaokernbruch durch Vermahlen gewonnen wird, mit einem Endwassergehalt von 2—4% und einer Temperaturbelastung beim Vermahlen von weniger als 100°C) durch eine thermische Behandlung (100—105°C) im offenen System auf ein Minimum reduziert, dann kann in einer zweiten Verfahrensstufe eine spezifische Reaktionslösung, z.B. Glucosesirup, bei Temperaturen um 105°C der Kakaomasse zugeführt werden. Dies bewirkt bei einer innigen Vermischung und den angegebenen Temperaturbereichen, daß bereits in diesem Verfahrensabschnitt die Glucose mit den Aminosäuren Reaktionen eingeht, die einen Schokoladengeschmack und/oder Karamelgeschmack ergeben. Dabei ist gewährleistet, daß in diesem Temperaturbereich noch keine entscheidenen röstspezifischen Reaktionen in der Kakaomasse stattfinden. Dieser Verfahrensabschnitt der Erfindung beinhaltet den Röstveredelungsprozess. Während die bisherigen bekannten Röstverfahren von Kakaomasse neben dem Rösteffekt auf einer Entsäuerung und Entfeuchtung beruhen, die dadurch intensiviert werden, daß z.B. Wasser eingeimpft wird, werden im vorliegenden Verfahren neben den Röstreaktionen bewußt weitere aromabeeinflussende Reaktionen herbeigeführt.

Es ist bekannt, daß das typische spezifische Kakaoaroma aus leicht-, mittel- und schwerflüchtigen Fraktionen besteht. Dieses Aroma bildet sich während des Röstprozesses aus den Aromavorstufen. Bei den bekannten Verfahren wird nach dem Dünnschichtverdampferprinzip Luft über die Oberfläche gespült, um die Brüden abzuziehen. Diese enthalten aber einen erheblichen Teil dieser aromaspezifischen, flüchtigen Substanz, so daß bei einer zu intensiven Behandlung, beispeilsweise einer Entgasung unter Zusatz von Wasser, das Kakaoaroma bekanntermaßen stark abflacht. Mit dem Verfahren nach der Erfingund wird zu dem Röstvorgang stetig in fortschreitender Weise dem zu röstenden Gut in die Oberfläche eine für die Kakaopovenienz spezifische Kohlehydrat enthaltende Lösungen injiziert, die die Wirkung hat, daß (a) die entstehenden leicht-, mittel- und schwerflüchtigen Aromen und (b) die eingeleiteten Vorveredelungsreaktionen (siehe 1. Verfahrensabschnitt) fortgeführt und neue aromabeeinflussende Reaktionen zwischen den Kakaofeststoffteilchen und den Kohlehydraten eingeleitet werden.

Es ist nachgewiesen worden, daß in einem geschlossenen System in Anwesenheit von Kakaomasse und Saccharose in einem Scherfeld aromaspezifische Reaktionen stattfinden, die auf das spätere Schokoladenaroma entscheidenden Einfluß haben. Da durch die Vorentgasung (zum Absenken des Wassergehaltes) und Vorveredelung alle nicht spezifischen, unerwünschten Aromainhaltstoffe entfernt oder gebunden sind, können die bei einer Behandlung im optimalen Rösttemperaturbereich entstehenden Stoffe durch entsprechende Kohlehydrat enthaltende Lösungen stark gebunden werden. Die optimale Rösttemperatur wird so definiert: Es gibt für jede Kakaoprovenienz eine spezifische Temperatur, bie der sich das Aroma so entwickelt, daß keine Oberröstungsprodukte entstehen und die Aromavorstufen, die zur Röstreaktion zur Verfügung stehen, weitestgehend umgesetzt worden sind.

Besonderheiten und Vorteile des erfindungsgemäßen Verfahrens sind folgende:

Die Luftzuführung in die auf einer beheizten Fläche ausgebreitete Dünnschicht erfolgt in die bewegte dünne Schicht stetig in eng beeinanderliegenden Bahnen in Form feinst verteilter Gasbläschen, so daß die Luft mit der Masse auf sehr großer Oberfläche in Berührung kommt, und ferner wird in den sich bewegenden Massefilm fein verteilt die Kohlehydrat enthaltende Lösung injiziert. Auch dies bedeutet eine große Flächenberührung zwischen Masse und Kohlehydrat enthaltende Lösung, und aufgrund der die flüssige Masse durchsetzenden und sich darin bewegenden Gasbläschen ergibt sich eine Feinstverteilung der injizierten Kohlenhydrat enthaltende Lösung in dem Massefilm. So können die vorstehend beschriebenen Veredelungsprozesse optimal ablaufen. Die unspezifischen, in der Gasphase gelösten Stoffe können abdiffundieren.

Nach einer bevorzugten Ausführungsform des Verfahrens ist es möglich, während der Veredelungsstufen fortschreitend in mehreren Schritten mehrmals eventuell unterschiedliche Kohlehydrat enthaltende Lösungen in den Massenfilm einzuimpfen. So können anschließend an die Begasungsbehandlung über die Breite des Massefilms fein verteilt Kakaoprovenienzspezifische Kohlehydrat enthaltende Lösung wie Mischsirupe und/ode wässrige Saccharoselösungen und/oder wässrige Fructoselösungen injiziert werden.

Auch hat es sich bewährt, nach der Vorveredelung eine Röstveredelung bei Temperaturen bis 130°C durchzuführen, während der insbesondere wiederum über die Breite des Massefilms fein verteilt Kakaoprovenienzenspezifische Kohlehydrat enthaltende Lösungen injiziert werden.

Es ist ferner möglich, die bei der Veredelung entstehenden Wrasen und Brüden besonders vorteilhaft am Entstehungsort stetig sofort von dem Massefilm abzuziehen, so daß unspezifische und unerwünschte Aromainhalstoffe sowie entstehendes Gas (Wasserdampf und $CO_2$) keine Möglichkeit mehr haben, sich wieder mit anderen Teilen des Gutes zu verbinden. Die mehrfachen Injektionsmöglichkeiten durch feine über die gesamte Breite des Massefilms verteilte Düsen erhöht sowohl die Intensivierung als auch die Variationsbreite der geschmacklichen Beeinflussung der Masse (z.B. durch Zugabe von milchhaltigen Kohlehydrat enthaltende Lösungen) bis zum Ende des Behandlungsvorganges, an dem die Masse schnell abgekühlt wird.

Das Verfahren nimmt so den größten Teil der aromabeeinflussenden Reaktionen vor, so daß auf weiteres Conchieren, bei dem sonst in zeit- und energieaufwendiger Weise diese Reaktionen stattfinden sollen, verzichtet werden kann.

Eine für die Durchführung des erfindungsgemäßen Verfahrens zweckmässige Vorrichtung verwendet einen an sich bekannten Dünnschichtverdampfer in Gestalt eines aufrecht stehenden Zylinderbehälters mit beheizter Innenwand mit einer darin umlaufenden, konzentrischen, vertikalen Welle, an der in mehreren Etagen Arme sitzen, deren Enden bis in die an der beheizten Zylinderinnenwand abwärts gleitende dünne Kakaomasseschicht hineinreichen. Damit die feine Gasstromverteilung im Massefilm vorgenommen werden kann, befinden sich an den Außenenden der Arme Düsenöffnungen für den Austritt eines dünnen Gasstrahls, die über Kanäle in den Armen und in der Welle mit einer Druckgasquelle verbunden sind, un im oberen Bereich an der Zylinderinnenwand sind über den Umfang verteilt Düsenöffnungen vorhanden, die mit einer die Kohlehydrat enthaltende Lösungen abgebenden Dosierpumpe verbunden sind. Gleitet der Massefilm dann an der Innenwand des Zylinderinnenbehälters abwärts, so erzeugen die sich mit der Welle drehenden Arme darin schraubenförmige Bahnen, entlang denen die Gasbläschen fein verteilt in die Masse eingeblasen werden. In feinen Strömen gelangt außerdem die Kohlehydrat enthaltende Lösungen aus den Düsenöffnungen an vielen Stellen in den Massefilm und wird darin durch die kreisende Bewegung der in den Massefilm eindringenden Spitzen der Arme und durch die Gasbläschen selbst fein verteilt. Eine besonders einfache und wirkungsvolle Konstruktion erhält die erfindungsgemäße Vorrichtung dadurch, daß auf der Welle eine konzentrische Stauscheibe sitzt, die zwischen ihrem Außenrand und der Behälterinnenwand einen Spalt von im wesentlichen der Massefilmstärke freiläßt, so daß durch die Stauscheibe der längliche zylindrische Behälter in zwei Abteile unterteilt wird. Im Abteil unter der Stauscheibe befinden sich mehrere Düsenringe in der beheizten Zylinderwand, über die verschiedene Kohlehydrat enthaltende Lösungen in die Masse injiziert werden können, und die Welle besitzt einen sie längs durchziehenden Kanal und mehrere, von außen bis zum Kanal geführte Öffnungen, so daß über diese Wege über eine mit dem Kanal in Verbindung stehende Absaugleitung praktisch am Ort des Entstehens die Wrasen und Brüden abgesaugt werden und nicht mehr mit weiteren Teilen des Massefilms in Berührung kommen können.

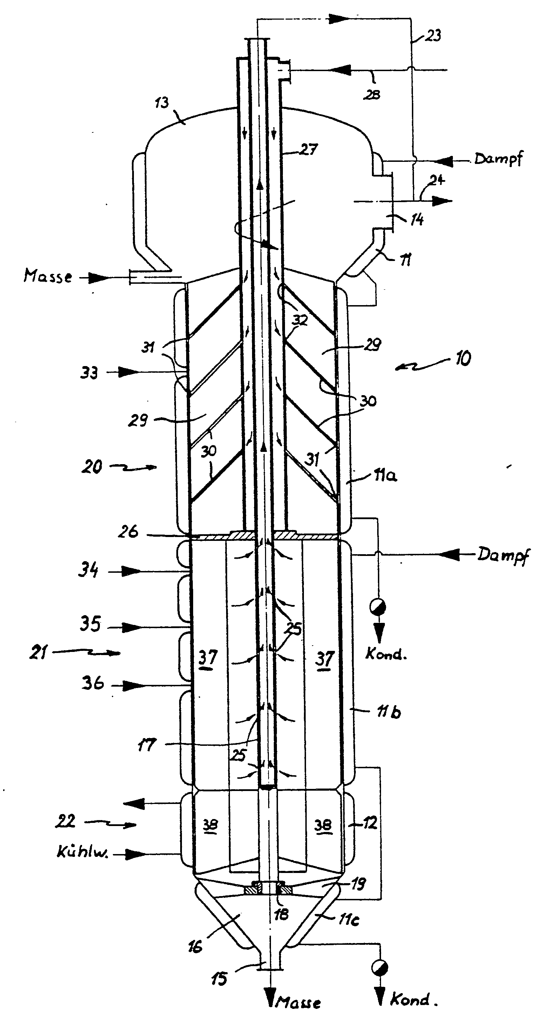

Anhand einer schematisierten Darstellung eines zur Durchführung des Verfahrens verwendeten, vertikal stehenden Zylinderbehälters werden das Verfahren und die Vorrichtung in einer Ausführungsform nunmehr anhand der Zeichnung erläutert.

Ein als Dünnschichtverdampfer bekannter, insgesamt mit 10 bezeichneter, vertikaler Zylinderbehälter ist von einem mittels Dampf beheizbaren Mantel 11a, 11b, 11c umgeben, wodurch der Behälterwandung des Dünnschichtverdampfers 10 in den verschiedenen Bereichen die für den Behandlungsvorgang erforderlichen Temperaturen vermittelt werden können. Im untersten Abschnitt des vertikalen Zylinderbehälters wird der Hohlraum des Mantels 12 mit Kühlwasser gespeist, um die behandelte Masse, die an der Zylinderinnenwand in dünner Schicht herabfließt, im Anschluß an die Röstveredelung sofort auf eine unter 80° liegende Temperatur abzukühlen. Der zylindrische Behälter ist am oberen Ende von einem domartig erweitertem Gassammelraum 13 abgeschlossen, aus dem über eine Austrittsöffnung 14 seitwärts Brüden und Wrasen aus der Vorveredelungszone des Dünnschichtverdampfers 10 abgesaugt werden. Am unteren Ende ist der vertikale zylindrische Behälter kegelförmig verengt und endet mit einer Auslauföffnung 15 für die fertig behandelte Masse. Dieser kegelförmig zulaufende Abschnitt 16 ist ebenfalls über seinen Mantel 11c beheizt, damit nach der darüber liegenden Abkühlphase die Masse leicht abfließen kann.

In seiner gesamten Länge wird der Behälter von einer Hohlwelle 17 durchzogen, die sich auf einem Lager 18 im oberen Teil des sich kegelförmig verjüngenden Abschnitts 16 abstützt, welches seinerseits mit einem Armstern 19 an der kegelförmigen Wand gehalten ist.

Der vertikale zylindrische Behälter ist in fünf übereinander liegende Abschnitte unterteilt. Der oberste Abschnitt ist der bereits erwähnte domförmige Abschnitt 13, aud dem die Brüden und Wrasen abgezogen werden. Es schließt sich daran der obere vertikale Abschnitt 20 an, in dem die Masse, die im Grenzbereich zwischen dem Abschnitt 13 und dem Abschnitt 20 in den Behälter eingebracht wird, der Vorveredelung unterworfen wird. Im wesentlichen ohne Absatz geht die zylindrische vertikale Wand des Vorveredelungsbereiches 20 in den darunter liegenden Röstveredelungsabschnitt 21 über, dem sich wiederum ohne Absatz der Kühlabschnitt 22 darunter liegend anschließt, worauf dier sich kegelförmig einengende Bereich 16 folgt, der in die Auslaßöffnung 15 mündet.

Die konzentrische Hohlwelle 17 ist am oberen Ende an eine Saugleitung 23 angeschlossen, welche mit einer Absaugleitung 24 verbunden ist, die an die Austrittsöffnung 14 im oberen domartigen Abschnitt 13 angeschlossen ist. Im Röstveredelungsbereich 21 weist die Hohlwelle zahlreiche Wanddurchbrüche 25 auf, durch die praktisch unmittelbar am Entstehungsort bei der Röstveredelung entstehende Wrasen und Brüden in die Hohlwelle 17 eintreten können und zum Absaugkanal 24 hin transportiert werden. Ferner sitzt an der Grenze zwischen Vorveredelungsbereich 20 und Röstveredelungsbereich 21 auf der Hohlwelle eine konzentrische Stauscheibe 26, die den Innenraum des Dünnschichtverdampfers 10 vertikal unterteilt und deren Außenrand zur Zylinderwand allseitig einen Abstand von etwa der Filmstärke der auf der Zylinderinnenwand herablaufenden Masse hat. Diese Stauscheibe verhindert das Aufsteigen von Brüden und Wrasen aus der Röstveredelungszone, so daß diese restlos über die Öffnungen 25 der Hohlwelle abströmen.

Oberhalb der Stauscheibe 26 ist die Hohlwelle 17 von einem Mantelrohr 27 umgeben, dass mit der Hohlwelle umläuft, abgedichtet durch die Oberwand des domartigen Raums 13 hindurchtritt und mit einer Zuführleitung 28 in an sich bekannter Weise in Verbindung ist. Im Vorveredelungsbereich 21 des Dünnschichtverdampfers 10 sitzen auf der Außenwand des Mantelrohres 27 Flügel oder Arme 29, die bis in die an der beheizten Zylinderwand abwärts gleitende, dünne Kakaomasseschicht hineinreichen. Ferner sind die Arme 29 von Kanälen 30 durchzogen, die an Düsenöffnungen 31 enden un mit Öffnungen 32 im Mantelrohr 27 in Verbindung stehen, so daß in das Mantelrohr über die Leitung 28 hineingedrückte Luft in Form von feinen Gasstrahlen an den Düsenöffnungen 31 austritt und sich in feinen Gasbläschen in dem Massefilm verteilt. Neben der Rührwirkung, die die Arme 29 haben, versehen sie vor allem die Aufgabe, die zugeführt Luft in schraubenförmigen Bahnen in dem zylindrischen, an der Behälterinnenwand herabgleitenden Massefilm in Form von feinen Bläschen einzutragen.

Schließlich weist der Zylindermantel im Vorveredelungsbereich 20 über den Umfang verteilt Düsenöffnungen auf, denen über eine Leitung 33 von einer Dosierpumpe (nicht gezeigt) eine Kohlehydrat enthaltende Lösung zugeführt wird, die dadurch von der Zylinderwand her in den abwärts gleitenden Massefilm fein verteilt eindringt.

Die Gleichmässige Verteilung dieser Kohlehydrat enthaltende Lösung erfolgt dann mit Hilfe der mechanischen Durcharbeitung des Massefilms durch die Arme und weiterhin durch die fein verteilten Gasbläschen, die aus den Düsenöffnungen 31 in den Massefilm eindringen. Gleiche, im Umfang verteilte Düsenöffnungen befinden sich in mehreren Etagen auch im Röstveredelungsbereich 21, des Dünnschichtverdampfers 10. Sie werden über Leitungen 34, 35, 36 von Dosierpumpen mit Kohlehydrat enthaltende Lösungen unter Druck versorgt, die dann in feinen Strahlen in den Massefilm eindringen, wodurch sich eine sehr gute Verteilung ergibt. Die gleichmässige Verteilung dieser Kohlehydrat enthaltende Lösungen im Massefilm erfolgt im übrigen mit Hilfe der an sich bekannten, auf der Hohlwelle 17 angebrachten Rührarme 37. Die Rührarme 38 befinden sich ebenfalls im Abkühlungsbereich 22.

Das Einbringen von Kohlehydrat enthaltende Lösungen in den Massefilm in mehreren Etagen ermöglicht es, nicht nur verschiedene Lösungen dieser Art, sondern auch besonders viele Kohlehydrat enthaltende Lösungen einzubringen, und durch das Verdampfen der in ihr enthaltenen Flüssigkeit veile Schad- und Stinkstoffe aus der Masse zu entfernen, ohne daß die Viskosität der Kakaomasse für den Verarbeitungsvorgang unbrauchbare Werte annimmt. Überdies werden besonders im Röstveredelungsbereich 21 die sich aus dem Massefilm ablösenden Schad- und Stinkstoffe unmittelbar am Ort ihres Entstehens über die Hohlwelle 17 abgesaubt, können also die Masse nicht mehr, das Aroma schädigend, beeinflussen.

**Patentansprüche**

1. Verfahren zur Vorveredelung roher Kakaomasse hinsichtlich der Verbesserung des Fermentationsgrades und zur Röstveredelung von vorveredelter Kakaomasse, bei dem in die rohe und zu röstende Kakaomasse spezifische Kohlehydrat enthaltende Lösungen fein verteilt werden und die Masse in dünner Schicht auf einer beheizten Fläche ausgebreitet und unter ständiger Erneuerung der Oberfläche über sie hinweg bewegt wird, die dabei entstehenden Wrasen und Brüden stetig von der Schicht abgezogen werden und Die Masse am Ende der Veredelung rasch auf eine Temperatur von weniger als 80°C abgekühlt wird, dadurch gekennzeichnet, daß im wesentlichen in die gesamte Fläche der sich bewegenden dünnen Schicht in eng beieinanderliegenden Bahnen ein Gas fein verteilt in das Gut eingeblasen und in den sich bewegenden Massefilm über seine Fläche verteilt die spezifischen Kohlehydrat enthaltende Lösungen injiziert werden, wobie für den Fall, daß als Gas ein Heißluft-Dampfgemisch oder Inertgas verwendet wird, dieses je nach Verfahrensstadium Temperaturen zwischen 100°C und 130°C besitzt.

2. Verfahren nach Anspruch 1, dadurch gekennzeichnet, daß das Gas von der der beheizten Flächen gegenüberliegenden freien Gutoberfläche in den Massefilm eingeblasen wird.

3. Verfahren nach Anspruch 1 oder 2, dadurch gekennzeichnet, daß anschließend an die Begasungsbehandlung über die Breite des Massefilms fein verteilt Kakaoprovenienzen-spezifische Kohlehydrat enthaltende Lösungen, wie Mischsirupe und/oder wässrige Saccharoselösungen und/oder wässrige Fructoselösungen injiziert werden.

4. Verfahren nach einem der Ansprüche 1 bis 3, dadurch gekennzeichnet, daß nach der Vorveredelung eine Röstveredelung bei Temperaturen bis 130°C durchgeführt wird, während der, insbesondere gemäß Anspruch 3, wiederum über die Breite des Massefilms fein verteilt Kakaoprovenienzen-spezifische Kohlehydrat enthaltende Lösungen injiziert werden.

5. Verfahren nach Anspruch 3 oder 4, dadurch gekennzeichnet, daß in mehreren Schritten im Behandlungsvorgang fortschreitend injiziert wird.

6. Verfahren nach den Ansprüchen 3 bis 5, dadurch gekennzeichnet, daß die fortlaufend entstehenden Wrasen und Brüden stetig, über die Massefilm-Bewegungsstrecke verteilt, abgezogen werden.

7. Verfahren nach einem der Ansprüche 1 bis 6, dadurch gekennzeichnet, daß zu und/oder nach der Röstveredelung eine rezepturspezifische, milch bestandteilehaltige Kohlehydrat enthaltende Lösung in gleichmässiger Verteilung über den Massenfilm injiziert wird.

8. Vorrichtung zur Durchführung des Verfahrens nach einem der Ansprüche 1 bis 7 mit einem Dünnschichtverdampfer in Gestalt eines aufrect stehenden Zylinderbehälters mit beheizter Innenwand und einer darin umlaufenden, konzentrischen vertikalen Welle, an der in mehreren Etagen Arme sitzen, deren Enden bis in die an der beheizten Zylinderwand abwärts gleitende dünne Kakaomassenschicht hineinreichen, dadurch gekennzeichnet, daß an den Außenenden der Arme (29) Düsenöffnungen (31) über Kanäle (30) in den Armen (29) und in der Welle (17, 27) mit einer Druckgasquelle verbunden sind und daß in Teilbereichen an der Zylinderwand über den Umfang verteilt, Düsenöffnungen münden, die mit einer die Kohlenhydrat enthaltende Lösung abgebenden Dosierpumpe verbunden sind.

9. Vorrichtung nach Anspruch 8, dadurch gekennzeichnet, daß auf der Welle eine konzentrische Stauscheibe (26) sitzt, die den Zylinderinnenraum horizontal unterteilt und deren Außenrand zur Zylinderwand allseitig einen Abstand von etwa der Massenfilm-Stärke hat, daß die Welle (17) von einem Absaugkanal längs durchzogen ist und Öffnungen (25), die an der Welle (17) über die Höhe des Zylinderabschnittes (21) unterhalb der Stauscheibe (26) verteilt sind, den Zylinderraum unterhalb der Stauscheibe (26) mit dem Absaugkanal verbinden und daß an der Zylinderinnenwand unterhalb der Stauscheibe (26) in mehreren Höhen Düsen zum Injizieren von Wasser und Kohlenhydrat enthaltende Lösungen in den Dünnschicht-Massefilm in feiner Verteilung münden.

## Revendications

1. Procédé de pré-traitement de la pâte de cacao brute visant à améliorer le dégré de fermentation, et de torréfaction de la pâte de cacao ainsi prétraitée, selon lequel des solutions d'hydrates de carbone sont bien réparties dans la pâte de cacao brute à torréfier, la pâte étant étalée en couche mince sur une surface chauffée et avançant continuellement avec un renouvellement permanent de la surface, les vapeurs et fumées étant en permanence extraites de la couche et la matière étant refroidie rapidement en fin de traitement à une température inférieure à 80°C, caractérisé en ce qu'un gaz est en fait finement distribué dans la matière, en filets proches les uns des autres, dans toute la surface de la couche mince en mouvement, et en ce que des solutions spécifiques d'hydrate de carbone sont injectées et réparties dans le film de pâte en mouvement, le gaz injecté, quand il s'agit d'un mélange d'air chaud et de vapeur ou d'un gaz inerte, ayant une température comprise entre 100°C et 130°C selon les différentes phases du procédé.

2. Procédé selon la revendication 1, caractérisé en ce que le gaz est injecté dans le film de pâte à partir de la surface libre de la matière opposée à la surface chauffée.

3. Procédé selon la revendication 1 ou 2, caractérisé en ce qu'après la phase d'injection de gaz, on injecte en distribution fine sur toute la largeur du film de pâte des solutions d'hydrates de carbone spécifiques des différentes espèces de cacao, telles que des sirops mixtes et/ou des solutions aqueuses de saccharose ou de fructose.

4. Procédé selon l'une quelconque des revendications 1 à 3, caractérisé en ce que la phase de pré-traitement est suivui d'une phase de torréfaction à des températures allant jusqu'à 130°C, pendant laquelle, en particulier selon la revendication 3, on injecte à nouveau, en distribution fine et sur toute la largeur du film de pâte, des solutions d'hydrates de carbone spécifiques des différentes espèces de cacao.

5. Procédé selon l'une quelconque des revendications 3 ou 4, caractérisé en ce que les injections peuvent se faire en plusiers étapes pendant le traitement.

6. Procédé selon l'une quelconque des revendications 3 à 5, caractérisé en ce que les vapeurs et fumées qui se dégagent et permanence sont continuellement extraites en différents endroits répartis sur la longueur du film en mouvement.

7. Procédé selon l'une quelconque des revendications 1 à 6, caractérisé en ce que des solutions d'hydrates de carbone à composition spécifique et contenant des composants lactés sont injectées de manière uniforme dans le film de pâte pendant et/ou après la torréfaction.

8. Dispositif de mise en oeuvre du procédé selon l'une quelconque des revendications 1 à 7, comportant un vaporisateur en couche mince en forme de cylindre vertical dont la paroi intérieure est chauffée et renferme un arbre vertical concentrique tournant, équipé à différents niveaux de bras dont les extrémités pénètrent dans la couche mince de pâte de cacao qui descend en glissant le long de la paroi chauffée du cylindre, caractérisé en ce que des gicleurs (31) situés aux extrémités de bras (20) sont reliés à une source de gaz comprimé par des canaux (30) pratiqués dans des bras (29) et dans l'arbre (17, 27), et que, dans certains compartiments, des gicleurs débouchent sur toute la périphérie de la paroi du cylindre, et sont reliés à une pompe de dosage débitant une solution d'hydrate de carbone.

9. Dispositif selon la revendication 8, caractérisé en ce que l'arbre est équipe d'un disque d'arrêt concentrique (26) qui subdivise horizontalement l'espace interne du cylindre et dont le périmètre se trouve à une distance régulière par rapport à la paroi du cylindre et qui correspond approximativement à l'épaisseur de film de pâte, en ce que l'arbre (17) est parcouru sur toute sa longueur par un canal d'extraction et que des orifices (25) répartis sur la hauteur de l'arbre comprise dans le compartiment (21), au-dessous du disque d'arrêt (26), relient ce compartiment du cylindre avec le canal d'extraction, et en ce que des gicleurs sont prévus à différents niveaux de la paroi intérieure du cylindre, au-dessous du disque d'arrêt (26), et peuvent être utilisés pour injecter de l'eau ou des solutions d'hydrates de carbone, en distribution fine, dans la couche mince de matière.

## Claims

1. Process for prerefinement of raw cocoa mass in order to improve the fermentation degree and to refining of prerefined cocoa mass by roasting, comprising dispersing into the raw cocoa mass to be roasted specific solutions including carbohydrates and spreading the mass in a thin layer over a heated area and moving it by continuously renewing the surface over the area, withdrawing continuously the developing vapor and steam from that layer and cooling the mass quickly at the end of the refinement to a temperature of less than 80°C, characterized in that a gas is blown into the material in a precisely dispersed manner in essentially a whole area of the moving thin layer in closely adjacent position parts and that the solution including the specific carbohydrates are injected into the moving mass film dispersed over its area, wherein in case a mixture of hot air and vapor or an inert gas is used as gas, that gas has in dependency from the process step temperatures between 100°C and 130°C.

2. Process according to claim 1, characterized in that the gas is blown into the mass film from the free surface of the material being opposite to the heated area.

3. Process according to claim 1 or 2, characterized in that following to the gas treatment solutions containing carbohydrates specified with respect to the cocoa origin, such as mixture-syrups and/or aqueous saccharobiose solution and/or aqueous fructose solutions are injected over the whole width of the mass film.

4. Process according to one of the claims 1—3, characterized in that after the prerefinement a refinement by roasting under temperatures up to 130°C is practiced, during which especially in accordance with claim 3 again solutions containing carbohydrates specified with respect to the cocoa origin are precisely dispersed injected over the width of the mass film.

5. Process according to claim 3 or 4, characterized by continuously injection on several steps during the treatment.

6. Process according to the claims 3—5, characterized in that the continuously developing vapor and steam are constantly withdrawn distributed over the moving path of the mass film.

7. Process according to one of claims 1—6, characterized in that during and/or after the prerefinement by roasting a specification specified, milk constituents-containing, carbohydrates containing solution is injected in a uniform distribution over the mass film.

8. Apparatus for practicing the process according to one of the claims 1—7 comprising a thin layer vaporizer configured as an upright positioned cylindrical container provided with a heated inner wall and a concentrical, vertical arbor rotating therein and provided with arms in several levels, the ends of which extending into the thin cocoa mass layer sliding downwardly on the heated wall of the cylinder, characterized in that at the outer ends of the arms (29) jet apertures (31) are connected through channels (30) within the arms (29) and within the arbor (17, 27) with a source for gas under pressure and that jet apertures connected to a metering pump delivering the solution are distributed over the circumference in some areas on the cylinder wall.

9. Apparatus according to claim 8, characterized in that on the arbor a concentric obstruction-disc (26) us is positioned dividing the inside space of the cylinder and being arranged with its outer edge with respect to and around the cylinder wall in a distance of nearly mass film thickness, that the arbor (17) is provided with a withdrawal-channel extending longitudinally therethrough as well as with openings (25) distributed on the arbor (17) over the height of the cylinder area (21), below the obstruction-disc (26) connected the cylinder space below the obstruction-disc (26) with the withdrawal-channel and that nozzles for the injection of water and carbohydrates containing solutions into the thin layer-mass film in a precisely distributed manner are discharging at the inside wall of the cylinder below the obstruction-disc (26) in several levels.